# EUROPÄISCHE PATENTANMELDUNG

(11) **EP 2 119 344 A2**
(43) Veröffentlichungstag der Anmeldung: **18.11.2009**
(21) Anmeldenummer: 09450098.0
(22) Anmeldetag: 11.05.2009
(51) Int. Cl.: A01K 1/015, A01K 1/035

(54) **Hundedecke**

(30) Priorität: 13.05.2008 AT 2742008 U
(71) Anmelder: Lux-Bellus, Adrien, 1020 Wien (AT)
(72) Erfinder: Lux-Bellus, Adrien, 1020 Wien (AT)
(74) Vertreter: Hehenberger, Reinhard

(57) **Zusammenfassung**

Eine Decke für Tiere, insbesondere für Hunde, weist zwei miteinander verbundene Lagen (1, 2) auf, wobei auf der oberen Lage (1) Öffnungen (3) und zwischen den Öffnungen (3) dichte, dicke Fransen (5) angebracht sind, welche in sich zu einem Haufen zusammenfallen, in dem die Hunde Knochen (6), einbuddeln und dadurch ihr natürliches Verhalten ausleben können. Die Decke kann mittels einer Schnur (8) im Rand (7) zu einer Tasche (9) zusammen gezogen werden.

## Beschreibung

Die Erfindung betrifft eine Decke für Haustiere, insbesondere für Hunde.

Zum natürlichen Verhalten vieler Kleintiere gehört es, Gegenstände wie Futter zu vergraben. Da dies in Gebäuden in der Regel nicht möglich ist, liegt der Erfindung die Aufgabe zu Grunde, eine Decke zu schaffen, welche es, Kleintieren, z.B. Hunden, erlaubt, diesem natürlichen Verhalten auch in Gebäuden bzw. in häuslicher Umgebung nachzukommen.

Die Aufgabe wird dadurch gelost, dass sie eine Lage hat, auf deren Oberfläche dichte, dicke Fransen angebracht sind, welche in sich zu einem Haufen zusammenfallen, sodass die Haustiere Gegenstände wie Knochen etc. vergraben können.

In den Fransen, welche, vorzugsweise zu einem Haufen in sich, zusammen fallen, können die Tiere Knochen etc. einbuddeln, das heißt vergraben, und dadurch ihr natürliches Verhalten auf kleiner Fläche ausleben, ohne Schmutz zu machen.

In einer bevorzugten Weiterbildung der Erfindung hat die Decke zwei miteinander am Rand verbundene Lagen, wobei in der oberen Lage Öffnungen angebracht sind, die einen Zugang zu einem zwischen der oberen Lage und der unteren Lage gebildeten Raum bilden, und wobei die Fransen an der Außenseite der oberen Lage zwischen den Öffnungen angeordnet sind. Dies ermöglicht den Tieren, mit Pfoten und Nase die Knochen in die Öffnungen oder in den Fransen zu vergraben oder einzubuddeln.

Auch kann man in den Öffnungen und unter den Fransen gezielt Gegenstande oder Futter verstecken und die Hunde zum Suchen animieren/trainieren.

Selbstverständlich dient die Decke gleichzeitig auch als Schlafplatz, da beispielsweise Hunde in freier Natur den Unterboden zum Schlafen auch zusammen schieben, was durch die Fransen begünstigt wird.

Vorzugsweise kann bei der Decke im Rand eine Schnur angeordnet sein, mit der sie zu einer Tasche zusammengezogen werden kann, was den Transport erleichtert und auch verhindert, dass verbuddelte Gegenstände heraus fallen oder verloren gehen.

Weiter Merkmale der Erfindung ergeben sich aus der nachfolgenden Beschreibung eines bevorzugten Ausführungsbeispiels der Erfindung.

Es zeigt:
- Fig. 1: eine erfindungsgemäße Decke im gespannten Zustand mit weg stehenden Fransen,
- Fig. 2: die Decke im in sich zusammen gefallenen Gebrauchszustand, und
- Fig. 3: die Decke im zu einer Tasche zusammengezogenen Zustand.

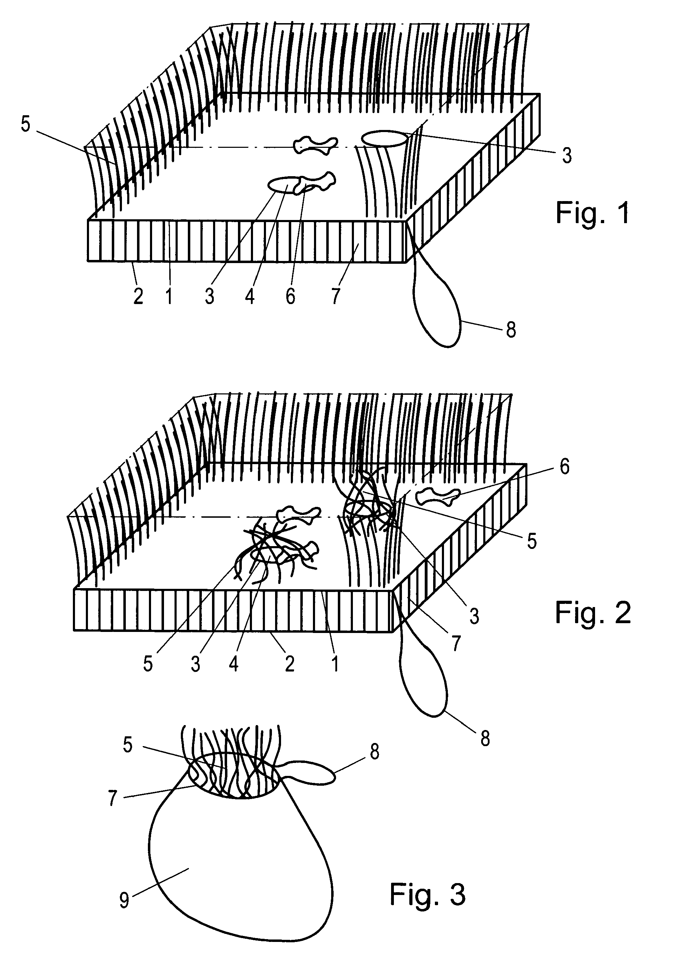

Die in den Fig. 1 bis 3 dargestellte Ausführungsform der Decke hat zwei Lagen in Form einer oberen Lage 1 und einer unteren Lage 2, zwischen denen ein Raum 4 gebildet wird. Die beiden Lagen 1, 2 sind an ihrem Rand 7 miteinander verbunden. In der oberen Lage 1 sind Öffnungen 3 angebracht und dazwischen dichte, dicke Fransen 5, welche im Gebrauchszustand in sich zu einem Haufen zusammenfallen, wie in Fig. 2 dargestellt ist. In den Fransen 5 bzw. dem von diesen gebildeten Haufen können die Tiere Knochen 6 etc. einbuddeln und dadurch ihr natürliches Verhalten ausleben.

Diese Funktion wird auch bei einer in den Zeichnungen nicht dargestellten Ausführungsform erfüllt, bei der nur eine Lage 1 mit Fransen 5 vorhanden ist.

Bei der in den Fig. 1 bis 3 dargestellten Ausführungsform mit zwei Lagen 1, 2 können die Tiere mit Pfoten und Nase die Knochen 6 sowohl in die Öffnungen 3 als auch in den Fransen 5 vergraben.

Im Rand 7 der Decke ist eine Schnur 8 angebracht, mit deren Hilfe die Decke zu einer Tasche 9 zusammengezogen werden kann, wie in Fig. 3 dargestellt ist.

Als Fransen 5 werden im Rahmen der vorliegenden Erfindung Schnüre, dickere Fäden, Bänder aber auch Streifen aus textilen Materialien verstanden, welche länglich sind. Unter einer "dichten" Anordnung der Fransen 5 auf der Lage 1 wird im Rahmen der vorliegenden Erfindung eine Anordnung verstanden, welche einerseits so dicht ist, dass die vom Haustier verbuddelten Gegenstände zwar einigermaßen versteckt sind, auf der anderen Seite aber das Verbuddeln der Gegenstände, beispielsweise eines Knochens 6, ohne weiteres möglich ist. Unter der Definition "dicke" Fransen wird im Rahmen der vorliegenden Erfindung eine Dicke verstanden, welche so groß ist, dass einerseits ein Verfilzen von Fransen 5 mit anderen Fransen 5 weitgehend verhindert wird und die Fransen 5 eine gewisse Steifigkeit aufweisen, auf der anderen Seite aber ein lockeres Zusammenfallen der Fransen 5 zu einem Haufen, bei welchem die Fransen 5 eine wirre Anordnung wie in Fig. 2 dargestellt einnehmen, möglich ist.

## Patentansprüche

1. Decke für Haustiere, insbesondere für Hunde, **dadurch gekennzeichnet, dass** sie eine Lage (1) hat, auf deren Oberfläche dichte, dicke Fransen (5) angebracht sind, welche in sich zu einem Haufen zusammenfallen, sodass die Haustiere Gegenstände wie Knochen (6) etc. vergraben können.

2. Decke nach Anspruch 1, **dadurch gekennzeichnet, dass** sie zwei miteinander am Rand (7) verbundene Lagen (1, 2) hat, dass in der oberen Lage (1) Öffnungen (3) angebracht sind, die einen Zugang zu einem zwischen der oberen Lage (1) und der unteren Lage (2) gebildeten Raum (4) bilden, und dass die Fransen (5) an der Außenseite der oberen Lage (1) zwischen den Öffnungen (3) angeordnet sind.

3. Decke nach Anspruch 1 oder 2, **dadurch gekennzeichnet, dass** im Rand (7) eine Schnur (8) angeordnet ist, mit der sie zu einer Tasche (9) zusammengezogen werden kann.
